# EUROPÄISCHE PATENTSCHRIFT

(11) **EP 3 228 381 B1**
(45) Veröffentlichungstag und Bekanntmachung des Hinweises auf die Patenterteilung: **26.07.2023**
(21) Anmeldenummer: 16164566.8
(22) Anmeldetag: 08.04.2016
(51) Int. Cl.: B01D 67/00, B01D 69/12, C02F 1/00

(54) **VERFAHREN ZUR HERSTELLUNG EINER BESCHICHTETEN POLYMERMEMBRAN ZUR FILTRATION VON WASSER**
PREPARATION OF COATED POLYMER MEMBRANE WITH A PORE STRUCTURE FOR THE FILTRATION OF WATER
PROCEDE DE PRODUCTION D'UNE MEMBRANE POLYMERE REVETUE D'UNE STRUCTURE POREUSE DESTINE A LA FILTRATION D'EAU

(43) Veröffentlichungstag der Anmeldung: 11.10.2017
(73) Patentinhaber: Aqua free Membrance Technology GmbH, 22525 Hamburg (DE)
(72) Erfinder: Sauer, Matthias Dr., 22525 Hamburg (DE)
(74) Vertreter: RGTH

(56) Entgegenhaltungen:
- JP-A- 2004 167 445
- US-B2- 8 137 442
- KOCHKODAN VICTOR ET AL: "A comprehensive review on surface modified polymer membranes for biofouling mitigation", DESALINATION, ELSEVIER, AMSTERDAM, NL, Bd. 356, 5. Oktober 2014 (2014-10-05), Seiten 187-207, XP029115454, ISSN: 0011-9164, DOI: 10.1016/J.DESAL.2014.09.015
- CHANGSHENG ZHAO ET AL: "Modification of polyethersulfone membranes - A review of methods", PROGRESS IN MATERIALS SCIENCE, Bd. 58, Nr. 1, 1. Januar 2013 (2013-01-01) , Seiten 76-150, XP055151349, ISSN: 0079-6425, DOI: 10.1016/j.pmatsci.2012.07.002
- JUN-KE PI ET AL: "Polypropylene microfiltration membranes modified with TiO2 nanoparticles for surface wettability and antifouling property", JOURNAL OF MEMBRANE SCIENCE, Bd. 500, 18. November 2015 (2015-11-18), Seiten 8-15, XP055238041, NL ISSN: 0376-7388, DOI: 10.1016/j.memsci.2015.11.014

## Beschreibung

Die vorliegende Erfindung betrifft ein Verfahren zur Herstellung einer beschichteten Polymermembran mit einer Porenstruktur zur Filtration von Wasser, umfassend die Schritte:
a) Bereitstellen einer Polymermembran mit einer ersten Vielzahl von Poren,
b) Beschichten der Polymermembran mit einer Schicht umfassend ein oxidierungsfähiges Material.

### Stand der Technik

Membranen mit einer Porenstruktur werden beispielsweise zu Filtrations-, Separations- und Katalysezwecken sowie für Sensoranwendungen verwendet. Zur Filtration von Wasser ist insbesondere die Verwendung von Polymermembranen mit einer Porenstruktur bekannt. Membranen, welche eine extrem kleine Porengröße aufweisen, können zur Biofiltration und Bioseparation verwendet werden. Derartige Membranen haben eine Porengröße im Mikrometerbereich. Wird Wasser durch eine derartige Membran gedrückt, so können aufgrund der kleinen Porengröße Wasserkeime zurückgehalten werden, ohne dass sich die chemische Zusammensetzung des Wassers ändert. Insbesondere im medizinischen Bereich, beispielsweise in Krankenhäusern, finden derartige Mikrofilter und Mikrofilter umfassende Mikrofiltersysteme Anwendung. Mikrofiltermembranen sind häufig Polymermembranen mit einer Porenstruktur, welche gegebenenfalls mit einem Metall beschichtet sind.

Die US 8,056,731 B2 offenbart eine Membranstruktur sowie ein Verfahren zur Herstellung einer Membranstruktur, wobei die Membranstruktur eine Polymerschicht mit einer Vielzahl von Poren aufweist, wobei eine keramische Schicht auf der Polymerschicht angeordnet ist, und wobei die keramische Schicht eine Vielzahl von im Wesentlichen nicht miteinander verbundenen Poren aufweist.

Aus der EP 1 955 756 B1 ist eine keramische Membrane mit verbesserter Haftung auf plasmabehandeltem polymeren Supportmaterial, sowie deren Herstellung und Verwendung bekannt, wobei die Membran auf Basis eines Polymervlieses auf und in dem Vlies eine keramische Beschichtung aufweist, die zumindest ein Oxid aufweist, wobei das Polymervlies einer Plasmabehandlung unterzogen ist, und wobei in dieser einen Beschichtung zumindest zwei Fraktionen von Oxiden vorhanden sind.

Die JP 2004-167445 A offenbart eine Filtermembran aus einem organischen Film. Auf der Filtrationsseite der Filtermembran ist ein dünner Metallfilm aufgetragen, dessen hydrophile Eigenschaften durch Bestrahlung mit UV-Strahlung verbessert werden.

Aus der US 8,137,442 B2 ist ein Verfahren zur Herstellung einer nanoporösen Schicht aus Nanopartikeln auf einem Substrat bekannt. Zur Herstellung der Schicht wird ein kolloidales Sol, in welchem Nanopartikel dispergiert sind, in einen Plasma-Jet injiziert, so dass die Nanopartikel auf das Substrat gesprüht werden.

In dem Artikel "A comprehensive review on surface modified polymer membranes for biofouling mitigation" (DESALINATION, ELSEVIER, AMSTERDAM, NL, Bd. 356, 5. Oktober 2014, Seiten 187-207) wird eine Polymermembran mit einer Beschichtung aus TiO₂-Partikeln beschrieben. Zur Herstellung der Beschichtung wird die Polymermembran in eine kolloidale Suspension aus TiO₂-Nanopartikeln getaucht.

Der Artikel "Modification of polyethersulfone membranes - A review of methods" (PROGRESS IN MATERIALS SCIENCE, Bd. 58, Nr. 1, 1. Januar 2013, Seiten 76 - 150) offenbart eine Polymermembran aus Polyethersulfon. Eine TiO₂-Schicht wird mittels UV-Bestrahlung hydrophilisiert.

Aus dem Artikel "Polypropylene microfiltration membranes modified with TiO2 nanoparticles for surface wettability and antifouling property" (JOURNAL OF MEMBRANE SCIENCE, Bd. 500, 18. November 2015, Seiten 8 - 15) sind Polymermembranen bekannt, welche durch eine Schicht aus TiO₂ eine verbesserte Hydrophilie aufweisen.

Die Größe der Poren der Membranen für Filtrationsanwendungen, insbesondere für Mikrofiltrationsanwendungen, hat dabei Einfluss auf die erreichbare Durchflussrate einer Flüssigkeit, insbesondere Wasser, durch die Membran. Je kleiner die Poren sind, desto kleiner ist die Durchflussrate durch die Filtermembran. Aus dem Stand der Technik ist bekannt, besonders dünne Membranen herzustellen, um die Durchflussrate wieder zu erhöhen. Derartige Membranen sind jedoch für mechanische Beschädigungen anfällig.

Es besteht daher im Stand der Technik das Bedürfnis nach einer beschichteten Polymermembran mit einer Porenstruktur zur Filtration von Wasser, die gegenüber bekannten Polymermembranen eine erhöhte Durchflussrate aufweisen.

### Darstellung der Erfindung: Aufgabe, Lösung, Vorteile

Der Erfindung liegt die Aufgabe zugrunde, ein Verfahren zur Herstellung einer beschichteten Polymermembran mit einer Porenstruktur zur Filtration von Wasser bereitzustellen, durch welches beschichtete Polymermembranen herstellbar sind, die gegenüber den aus dem Stand der Technik bekannten Membranen eine höhere Durchflussrate aufweisen und die insbesondere für hygienische oder medizinische Anwendungen geeignet sind. Eine weitere der Erfindung zugrunde liegende Aufgabe besteht darin, ein einfaches und kostengünstiges Verfahren zur Herstellung einer beschichteten Polymermembran mit einer Porenstruktur zur Filtration von Wasser bereitzustellen. Eine weitere Aufgabe der vorliegenden Erfindung besteht darin, eine beschichtete Polymermembran mit einer Porenstruktur zur Filtration von Wasser bereitzustellen, welche eine höhere Durchflussrate als bekannte Polymermembranen aufweist und welche darüber hinaus einfach und kostengünstig herzustellen ist.

Zur Lösung dieser Aufgabe wird ein Verfahren zur Herstellung einer beschichteten Polymermembran mit einer Porenstruktur zur Filtration von Wasser umfassend die Schritte:
a) Bereitstellen einer Polymermembran mit einer ersten Vielzahl von Poren,
b) Beschichten der Polymermembran mit einer Schicht umfassend ein oxidierungsfähiges Material, wobei das oxidierungsfähige Material ein Metall oder Halbmetall ausgewählt aus der Gruppe umfassend Titan, Zirkonium, Silizium, Aluminium, Mangan, Vanadium, Chrom aufweist,
   vorgeschlagen, wobei das Verfahren weiter den Schritt der
c) Herstellung einer Oxidschicht durch Oxidation zumindest eines Teils der Schicht umfassend ein oxidierungsfähiges Material in einem Oxidationsverfahren
umfasst, wobei dass das Oxidationsverfahren ein Niederdruck-Plasmaverfahren ist.

Das erfindungsgemäße Verfahren ist vergleichsweise einfach und kostengünstig durchzuführen. Zudem wird mit dem erfindungsgemäßen Verfahren eine beschichtete Polymermembran bereitgestellt, welche einen verbesserten transmembranen Fluss beziehungsweise eine verbesserte Durchflussrate aufweist, und welche zudem eine längere Standzeit durch reduzierte partikuläre Ablagerungen auf der Membran in Wasseranwendungen gewährleistet.

Überraschenderweise hat sich gezeigt, dass mit dem erfindungsgemäßen Verfahren eine mit einer Oxidschicht beschichtete Polymermembran bereitgestellt wird, wobei die Polymermembran aufgrund der Oxidschicht eine höhere Hydrophilie aufweist, wodurch ein höherer transmembraner Fluss beziehungsweise eine höhere Durchflussrate von Wasser durch die Polymermembran in Filteranwendungen erreicht wird. Dabei werden die erfindungsgemäßen Vorteile insbesondere durch das Vorsehen eines weiteren Oberflächenbehandlungsschritts im Schritt der Herstellung einer Oxidschicht durch Oxidation zumindest eines Teils der Schicht umfassend ein oxidierungsfähiges Material in einem Niederdruck-Plasmaverfahren erreicht. Die Schicht kann auch aus einem oxidierungsfähigen Material bestehen.

Überraschend hat sich gezeigt, dass durch den vorgeschlagenen zusätzlichen Oberflächenbearbeitungsschritt der Herstellung einer Oxidschicht durch Oxidation zumindest eines Teils der Schicht umfassend ein oxidierungsfähiges Material eine stärkere Oxidation und gegebenenfalls eine Durchoxidation der im Schritt des Beschichtens der Polymermembran mit einer Schicht aus einem oxidierungsfähigen Material aufgetragenen Schicht eines oxidierungsfähigen Materials erzielt werden kann, wodurch die Hydrophilie und somit die Durchflussrate durch die Membran insbesondere in Filtrationsanwendungen von Wasser besonders vorteilhaft erhöht wird. Neben oder anstatt einem physikalischen oder nasschemischen Oxidationsverfahren kann auch ein elektrochemisches Oxidationsverfahren vorgesehen sein. Es wird jedoch ein physikalisches oder nasschemisches Oxidationsverfahren bevorzugt.

Grundsätzlich kann das oxidierungsfähige Material auch ein nichtmetallisches Material, insbesondere ein kohlenstoffhaltiges nichtmetallisches Material, umfassen.

Durch Verwendung eines geeignet ausgewählten Metalls oder Halbmetalls im Verfahren zur Herstellung einer beschichteten Polymermembran lässt sich eine besonders starke Oxidation des oxidierungsfähigen Materials erreichen, wodurch die Hydrophilie der Polymermembran gesteigert wird und somit die Vorteile gegenüber dem Stand der Technik weiter verbessert werden.

Es kann auch vorgesehen sein, dass ein nichtmetallisches Material, insbesondere ein kohlenstoffhaltiges nichtmetallisches Material, als oxidierungsfähiges Material für den Schritt der Beschichtung der Polymermembran gewählt wird. So können, um eine Polymermembran mit einer Schicht umfassend oder aus einem oxidierungsfähigen Material zu beschichten, insbesondere auch Kohlenstoff und Kohlenstoffverbindungen verwendet werden.

Bevorzugt kann ferner vorgesehen sein, dass die Oxidschicht mindestens ein Metalloxid oder Halbmetalloxid ausgewählt aus der Gruppe umfassend Titandioxid, Titan(IV)-oxid, Siliziumdioxid, Aluminiumoxid, Zirkonium(IV)-oxid, Mangan(IV)-oxid, Vanadium(IV)-oxid aufweist.

Es hat sich herausgestellt, dass durch Verwendung der genannten und weiterer Metalle oder Halbmetalle beziehungsweise Metalloxide oder Halbmetalloxide als oxidierungsfähiges Material im Verfahrensschritt der Beschichtung der Polymermembran eine beschichtete Polymermembran mit einer Porenstruktur zur Filtration von Wasser erhalten wird, welche eine besonders hohe Durchflussrate sowie eine längere Standzeit durch reduzierte partikuläre Ablagerung auf der Membran in Wasseranwendungen aufweist.

Besonders bevorzugt kann vorgesehen sein, dass das Niederdruck-Plasmaverfahren ein Niederdruck-Sauerstoffplasmaverfahren ist.

Grundsätzlich kann das Oxidationsverfahren auch ein elektrochemisches Verfahren, beispielsweise ein Anodisierungsverfahren sein, dies ist jedoch nicht bevorzugt.

Besonders bevorzugt ist das Oxidierungsverfahren kein elektrochemisches Verfahren und insbesondere kein Anodisierungsverfahren.

Durch Verwendung eines Niederdruck-Plasmaverfahrens als Oxidationsverfahren wird eine besonders gleichmäßige Oxidation beziehungsweise Durchoxidation des oxidierungsfähigen Materials erzielt, durch welche die Hydrophilie und somit die Durchflussrate und die Standzeit der Polymermembran in Wasseranwendungen erhöht wird.

Zwar kann auch ein Plasma-Immersions-Ionenimplantationsverfahren im Schritt der Herstellung einer Oxidschicht durch Oxidation zumindest eines Teils der Schicht umfassend oder aus einem oxidierungsfähigen Material in einem physikalischen oder nasschemischen Oxidationsverfahren verwendet werden, jedoch ist bevorzugt vorgesehen, dass das Oxidationsverfahren kein Plasma-Immersionslonenimplantationsverfahren ist.

Bevorzugt kann zudem vorgesehen sein, dass im Rahmen des erfindungsgemäß angewendeten Niederdruck-Plasmaverfahrens ein Gasfluss des Plasmagases, auf 5 sccm (standard cubic centimeters per minute) bis 200 sccm, bevorzugt auf 10 sccm bis 100 sccm, besonders bevorzugt auf etwa 20 sccm, eingestellt wird, und/oder wobei die Leistung eines Plasmagenerators auf 10 W bis 1000 W, bevorzugt auf 50W bis 500 W, besonders bevorzugt auf etwa 250 W, eingestellt wird, und/oder wobei ein Frequenzbereich eines Plasmagenerators auf 1 MHz bis 3 GHz, bevorzugt auf 10 MHz bis 2 GHz, besonders bevorzugt auf etwa 13,56 MHz, eingestellt wird.

Durch den bevorzugten Gasfluss beziehungsweise durch die bevorzugte Leistung eines Plasmagenerators und/oder die bevorzugte Frequenz eines Plasmagenerators wird eine besonders vorteilhafte Ausgestaltung der beschichteten Polymermembran erhalten, welche insbesondere in Wasserfiltrationsanwendungen und weiter insbesondere in hygienischen oder medizinischen Anwendungen vorteilhaft ist. Bei einem Niederdruck-Plasmaverfahren sind die relevanten Prozessparameter Druck, Leistung, Prozesszeit, Gasfluss und Gaszusammensetzung.

Bevorzugt kann vorgesehen sein, dass die Oxidation beziehungsweise die Durchoxidation der im vorangegangenen Verfahrensschritt aufgetragenen Schicht umfassend oder aus einem oxidierungsfähigen Material durch Behandlung in einem Niederdruck-Sauerstoffplasma geschieht.

Weiter bevorzugt kann vorgesehen sein, dass, insbesondere für das Oxidationsverfahren, ein Niederdruck von 0,05 mbar bis 1 mbar, bevorzugt von 0,1 mbar bis 0,7 mbar, insbesondere bevorzugt von 0,15 mbar bis 0,25 mbar, weiter besonders bevorzugt von etwa 0,2 mbar, erzeugt wird, und/oder dass eine Prozesszeit für den Schritt der Herstellung einer Oxidschicht durch Oxidation zumindest eines Teils der Schicht umfassend oder aus einem oxidierungsfähigen Material, insbesondere für das Oxidationsverfahren, von 1 Min. bis 10 Min., bevorzugt von 2 Min. bis 8 Min., besonders bevorzugt von 4 Min. bis 6 Min., gewählt wird.

Ein Niederdruck-Plasmaverfahren, insbesondere ein Niederdruck-Sauerstoffplasmaverfahren kann dabei beispielhaft folgendermaßen ablaufen. Eine im Verfahrensschritt des Auftragens der Beschichtung beschichtete Polymermembran wird in eine Vakuum- oder Plasmakammer eingebracht. Es wird dann ein Niederdruck in einem Bereich von 0,1 mbar bis 0,7 mbar, bevorzugt von etwa 0,2 mbar erzeugt. Darauffolgend wird ein passender Gasfluss, insbesondere ein Sauerstoffgasfluss gewählt, wobei der Gasfluss auf 20 sccm bis 100 sccm, bevorzugt auf etwa 20 sccm eingestellt wird. Für einen zur Erzeugung des Plasmas vorgesehenen Plasmagenerator wird eine Plasmageneratorleistung zwischen 50 W bis 500 W gewählt. Als passender Frequenzbereich im Radiowellen- bis Mikrowellenbereich wird für den Plasmagenerator ein Bereich von 1 MHz bis 3 GHz gewählt, wobei bevorzugt etwa 13,56 MHz gewählt werden. Die Verfahrenszeit beziehungsweise Prozesszeit für den Schritt der Oxidation beziehungsweise Durchoxidation wird auf 1 Min. bis 10 Min. festgelegt. Darauffolgend wird das Plasma gezündet und über die gewählte Verfahrens- oder Prozesszeit die Oxidation oder Durchoxidation durchgeführt. Anschließend wird die Polymermembran aus der Vakuum- oder Plasmakammer ausgeschleust.

Durch den Verfahrensschritt der Herstellung einer Oxidschicht durch Oxidation zumindest eines Teils der Schicht umfassend oder aus einem oxidierungsfähigen Material in einem Niederdruck-Plasmaverfahren wird das auf der nach dem vorhergehenden Verfahrensschritt des Beschichtens der Polymermembran bereitgestellte oxidierungsfähige Material oxidiert beziehungsweise wird die Oxidation verstärkt. Mit anderen Worten wird eine Umwandlung oder Verstärkung der oxidierungsfähigen Schicht, beispielsweise aus Metall oder Halbmetall, durch physikalische oder nasschemische Aktivierungs- und Oxidationsverfahren erzielt. Dabei kann sich aufgrund des Kontaktes der beschichteten Polymermembran mit dem Sauerstoff in der Umgebungsluft bereits eine geringfügige Oxidation nach der Durchführung des zweiten Verfahrensschrittes der Beschichtung der Polymermembran mit einer Schicht aus einem oxidierungsfähigem Material gebildet haben, sodass durch den dritten Verfahrensschritt die Oxidschicht durch Oxidation verstärkt wird oder im Wesentlichen erst hergestellt wird.

Ferner kann bevorzugt vorgesehen sein, dass die Polymermembran eine asymmetrische oder symmetrische Membran ist, wobei die Membran bevorzugt ein Kapillarmembransystem und/oder ein Flachmembransystem aufweist.

Je nach Anwendungsgebiet kann eine asymmetrische oder symmetrische Membran bevorzugt sein, um die besonderen Vorteile zu erzielen. Kapillarmembransysteme oder Flachmembransyteme haben sich dabei als besonders vorteilhaft für die Wasserfiltration, insbesondere in medizinischen und hygienischen Anwendungen, erwiesen.

Bevorzugt kann durch den Schritt des Beschichtens der Polymermembran mit einer Schicht umfassend oder aus einem oxidierungsfähigen Material eine Polymermembran bereitgestellt werden, bei der die Membranstruktur, insbesondere die poröse Membranstruktur beziehungsweise die Porenstruktur mit einer Schicht aus einem oxidierungsfähigen Material beschichtet ist, sodass die Porenstruktur der Polymermembran durch die Schicht aus einem oxidierungsfähigen Material nicht verschlossen wird. Weist die Polymermembran beispielsweise ein Kapillarmembransystem auf, so kann vorgesehen sein, dass die Schicht aus einem oxidierungsfähigen Material einzelne Faserstrukturen der Polymermembran zumindest teilweise umhüllt. Dabei kann die Umhüllung der Faserstrukturen der Polymermembran nur in einer äußeren Schicht der Polymermembran stattfinden. Es kann jedoch auch vorgesehen sein, dass die Beschichtung der Faserstrukturen oder der Polymermembran beziehungsweise der Porenstruktur der Polymermembran bis in tiefe Schichten der Polymermembran beziehungsweise vollständig durch die Polymermembran erfolgt.

Auch kann bevorzugt vorgesehen sein, dass in einem weiteren Verfahrensschritt oder durch das Oxidationsverfahren eine zweite Vielzahl von Poren in der Schicht aus einem oxidierungsfähigen Material gebildet wird.

So kann auch vorgesehen sein, dass die Polymermembran mit einer Schicht aus einem oxidierungsfähigen Material beschichtet wird, sodass zumindest beschichtungsseitig die Porenstruktur der Polymermembran nach außen verschlossen wird. Um die derart beschichtete Polymermembran wieder zum Einsatz zur Filtration von Wasser zu befähigen, muss die Porenstruktur geöffnet werden. Dies kann beispielsweise dadurch geschehen, dass in einem weiteren Verfahrensschritt oder durch das Oxidationsverfahren eine zweite Vielzahl von Poren in der Schicht umfassend oder aus einem oxidierungsfähigen Material gebildet wird, welche in einem strömungstechnischen Kontakt zu der Porenstruktur der Polymermembran und zur Außenwelt oder Umgebung steht, sodass ein Durchfluss von einer Flüssigkeit, insbesondere von Wasser, von der beschichteten Seite der Polymermembran durch die Polymermembran auf die andere Seite möglich ist oder umgekehrt.

Dabei kann die Herstellung der zweiten Vielzahl von Poren in der Schicht umfassend oder aus einem oxidierungsfähigen Material durch das Oxidationsverfahren selbst beziehungsweise durch eine geeignete Wahl des Oxidationsverfahrens stattfinden, es kann jedoch auch ein separater Schritt vorgesehen sein, durch welchen eine zweite Vielzahl von Poren in der Schicht aus einem oxidierungsfähigen Material gebildet wird.

Dieser zusätzliche Schritt kann zwischen den Schritten der Beschichtung der Polymermembran mit einer Schicht umfassend oder aus einem oxidierungsfähigen Material und dem Schritt der Herstellung einer Oxidschicht durch Oxidation zumindest eines Teils der Schicht umfassend oder aus einem oxidierungsfähigen Material stattfinden. Jedoch kann dieser Schritt auch nach dem Schritt der Herstellung einer Oxidschicht vorgesehen sein.

Dabei kann zur Herstellung der zweiten Vielzahl von Poren auch ein Plasma-Immersions-lonenimplantationsverfahren Anwendung finden. Bevorzugt wird aber im Schritt der Beschichtung der Polymermembran die Beschichtung so ausgeführt, dass die Porenstruktur der Polymermembran durch die Schicht aus einem oxidierungsfähigen Material nicht verschlossen wird, und dass eine anschließende Herstellung einer zweiten Vielzahl von Poren im oxidierungsfähigen Material zur beschichtungsseitigen Öffnung der Porenstruktur der Polymermembran nicht durchgeführt werden muss.

Bevorzugt ist vorgesehen, dass die Größenverteilung der ersten Vielzahl von Poren der Polymermembran einen Mittelwert von 0,04 µm bis 1,5 µm, bevorzugt von 0,1 µm bis 0,3 µm, insbesondere bevorzugt von etwa 0,2 µm, aufweist, und/oder dass die Größenverteilung der zweiten Vielzahl von Poren in der Schicht aus einem oxidierungsfähigen Material einen Mittelwert von 0,04 µm bis 1,5 µm, bevorzugt von 0,1 µm bis 0,3 µm, insbesondere bevorzugt von etwa 0,2 µm, aufweist.

Weiter bevorzugt kann vorgesehen sein, dass die Polymermembran eine Dicke von 10 µm bis 500 µm, bevorzugt von 200 µm bis 400 µm, besonders bevorzugt von etwa 300 µm aufweist, und/oder dass die Schicht umfassend oder aus einem oxidierungsfähigen Material eine Dicke von 1 nm bis 1 µm, bevorzugt von 10 nm bis 400 nm, besonders bevorzugt von etwa 100 nm aufweist.

Durch die bevorzugte Wahl der Größenverteilung der ersten beziehungsweise der zweiten Vielzahl von Poren beziehungsweise durch die bevorzugte Wahl der Dicke der Polymermembran beziehungsweise der Dicke der Schicht umfassend oder aus einem oxidierungsfähigen Material kann eine besonders hydrophile Filtermembran bereitgestellt werden, welche eine optimierte Durchflussrate beziehungsweise einen optimierten transmembranen Fluss aufweist.

Besonders bevorzugt ist vorgesehen, dass die Polymermembran mindestens ein Polymer ausgewählt aus der Gruppe umfassend Polysulfon, Polyethersulfon, Polyacrylnitril, Polyvinylfluorid, Polyethylen, Cellulose, Celluloseester, Polyamid, Polyetherketon, Polyetherimid, Polyimid, Silikon, Polymethylacrylat, Polycarbonat, Polyarylen, Polyphenylenether, Polybutadien, Vinylpolymer, Polyalkalyen, Fluoropolymer, Polyvinylidenfluorid, Polytetrafluoroethylen, aufweist.

Nach Versuchen des Anmelders haben sich die vorgenannten Polymere als besonders geeignet zur Anwendung in einer Polymermembran und in einem Verfahren zur Herstellung einer beschichteten Polymermembran mit einer Porenstruktur zur Filtration von Wasser erwiesen.

Beispielhaft kann eine asymmetrische oder symmetrische Polymermembran mit einer Porenstruktur in Form eines PES/NMP/PVP - Kapillarmembransystems mit 0,2 µm Porenstruktur hergestellt werden. Zur Herstellung einer derartigen asymmetrischen oder symmetrischen Polymermembran mit einer Porenstruktur wird in einem ersten Schritt eine Mischung aus Polyethersulfon, N-Methylpyrrolidon und Polyvinylpyrrolidon angesetzt ("Dope"). Zudem wird eine zweite Mischung aus N-Methylpyrrolidon und Polyvinylpyrrolidon angesetzt ("Lumen"). In einem weiteren Schritt werden zur Herstellung einer asymmetrischen oder symmetrischen Polymermembran mit einer Porenstruktur die beiden Mischungen "Dope" und "Lumen" gemischt, entgast und temperiert. Darauffolgend wird in einem Extrusionsverfahren die Kapillarmembran über eine Spinnmaschine erzeugt. Schließlich wird die erzeugte extrudierte Kapillarmembranen mit spezifischer Behandlungschemie nachbehandelt.

Das vorgenannte Ausführungsbeispiel zur Herstellung eines PES/NMP/PVP/Kapillarmembransystem mit 0,2 µm Porenstruktur stellt ein ausschließlich beispielhaftes Ausführungsbeispiel dar. Dabei können die Mischungen "Dope" und "Lumen" auch andere Inhaltsstoffe aufweisen, soweit diese zur Herstellung einer asymmetrischen oder symmetrischen Polymermembran mit einer Porenstruktur geeignet sind. Auch kann die Porenstruktur von 0,2 µm anwendungsbezogen gewählt werden, insbesondere ist es möglich, dass die Porenstruktur der Polymermembran, also der ersten Vielzahl von Poren, einen Mittelwert von 0,04 µm bis 1,5 µm, bevorzugt von 0,1 µm bis 0,3 µm, insbesondere bevorzugt von etwa 0,2 µm, aufweist.

Weiter bevorzugt wird vorgeschlagen, dass der Verfahrensschritt der Beschichtung der Polymermembran mit einer Schicht umfassend oder aus einem oxidierungsfähigen Material ein Verfahren der Dünnschichttechnik, und/oder ein physikalisches Gasphasenabscheidungverfahren, und/oder ein chemisches Gasphasenabscheidungverfahren, und/oder ein thermisches Verdampfungsverfahren, und/oder ein Sputterverfahren, insbesondere ein DC-Sputter-, HF-Sputter-, lonenstrahlsputter-, Magnetronsputterverfahren oder ein reaktives Sputterverfahren, und/oder ein plasmabasiertes lonenimplantationsverfahren, umfasst.

Bevorzugt kann ferner vorgesehen sein, dass für den Schritt der Beschichtung der Polymerschicht mit einer Schicht umfassend oder aus oxidierungsfähigem Material die Polymermembran in einer Beschichtungskammer angeordnet wird, wobei die Polymermembran bevorzugt in der Beschichtungskammer gedreht, rotiert und/oder durch die Beschichtungskammer durchgezogen wird.

Durch die Drehung und/oder Rotation der Polymermembran in der Beschichtungskammer beziehungsweise durch das Durchziehen der Polymermembran durch die Beschichtungskammer wird eine gleichmäßige Membranbeschichtung erhalten, welche eine Polymermembran zur Filtration von Wasser bereitstellt, die eine besonders hohe Durchflussrate erzielt.

Weiter bevorzugt kann vorgesehen sein, dass in der Beschichtungskammer ein Target des oxidierungsfähigen Materials angeordnet wird, wobei der Abstand der Polymermembran zum Target zwischen 10 mm und 200 mm, bevorzugt zwischen 50 mm und 80 mm, insbesondere bevorzugt etwa 60 mm oder etwa 70 mm beträgt, wobei weiter bevorzugt der Druck in der Beschichtungskammer während der Beschichtung 1 x 10⁻⁷ bis 3 x 10⁻⁸ mbar beträgt.

Das Target des oxidierungsfähigen Materials ist dabei eine vorbestimmte Menge des oxidierungsfähigen Materials, beispielsweise eine vorbestimmte Menge eines Metalls wie Titan, aus dem durch das Plasma in beispielsweise einem Sputter-Verfahren die Atome des oxidierungsfähigen Materials, beispielsweise die Titanatome, abgelöst werden und sich auf der Membran ablagern.

Weiter bevorzugt kann vorgesehen sein, dass die Polymermembran mit einer Umlaufgeschwindigkeit von 0,1 bis 5 Umdrehungen pro Minute, bevorzugt mit 0,5 bis 5 Umdrehungen pro Minute, besonders bevorzugt mit etwa einer Umdrehung pro Minute gedreht oder rotiert wird, und/oder wobei pro Drehung der Polymermembran eine Metallschicht und/oder eine Oxidschicht von 0,1 nm bis 10 nm, bevorzugt 0,5 nm bis 5 nm, insbesondere bevorzugt von etwa 1 nm Dicke, auf die Polymermembran aufgetragen wird, und/oder dass die Polymermembran mit einer Zuggeschwindigkeit von 10 cm/min bis 40 cm/min durch die Beschichtungskammer gezogen wird, wobei bevorzugt eine Metallschicht und/oder eine Oxidschicht von 20 nm bis 150 nm aufgetragen wird.

Durch Verwendung der bevorzugten Parameter für die Umlaufgeschwindigkeit beziehungsweise das Schichtwachstum wird ein Verfahren zur Herstellung einer Polymermembran bereitgestellt, wobei die hergestellte Polymermembran eine besonders hohe Durchflussrate bei gleichzeitig geringer Dicke der Polymermembran aufweist.

Ferner ist bevorzugt vorgesehen, dass der Anteil des Oxids 10 bis 100 mol-% oder Gew.-% oder Volumen-%, insbesondere 50 bis 90 mol-% oder Gew.-% oder Volumen-%, der Schicht des oxidierungsfähigen Materials beträgt, und/oder dass die Porosität der Polymermembran von 40 % bis 90 %, bevorzugt 70% bis 90 %, beträgt, und/oder das die Porosität der Schicht des oxidierungsfähigen Materials und/oder der Oxidschicht von 40 bis 90%, bevorzugt 70% bis 90 %, beträgt.

Durch den hohen Anteil des Oxids der Schicht des oxidierungsfähigen Materials, und somit durch Bereitstellung einer mit einer stark oxidierten Beschichtung versehenen Polymermembran, erhält die Polymermembran eine höhere Hydrophilie, was zu einem verbesserten transmembranen Fluss beziehungsweise zu einer verbesserten Durchflussrate sowie zu einer längeren Standzeit durch reduzierte partikuläre Ablagerung auf der Membran in Wasseranwendungen führt.

Beispielhaft wird die Beschichtung einer PES-Membran mit Titan mit Hilfe einer Magnetron-Sputter-Deposition beschrieben:
Im Rahmen der Beschichtung wird zunächst eine PES-Membran, eine Polymemembran, zugeschnitten. Dabei kann vorgesehen sein, dass der Zuschnitt der PES-Membran ein Maß von 12 cm x 12 cm aufweist. Die zugeschnittenen PES- oder Polymermembranen werden auf einem Probenhalter befestigt und in eine Vorvakuumschleuse mit 10⁻⁷ mbar eingebracht. Darauffolgend wird die auf den Probenhalter befestigte PES-Membran in eine Beschichtungskammer eingebracht. Zusätzlich wird in der Beschichtungskammer ein Titan-Target angeordnet. Die PES-Membran wird in einem geeigneten Abstand vom Titan-Target, beispielsweise 60 mm bis 70 mm, angeordnet. Es wird darauffolgend ein geeigneter Sputter-Gasdruck zur Erreichung einer glatten Schichtkonsistenz der Schicht eines oxidierungsfähigen Materials gewählt, wobei hierfür ein Bereich von bevorzugt 7 x 10⁻⁴ mbar bis 3 x 10⁻³ mbar geeignet ist. Die Umlaufgeschwindigkeit beziehungsweise die Geschwindigkeit, mit der die zu beschichtende PES-Membranprobe in der Beschichtungskammer gedreht wird, um die gezielte laterale Schichtablagerung zu erreichen, wir auf ca. 1 Umdrehung pro min. eingestellt, woraus eine Ablagerung von 1 nm pro min. des oxidierungsfähigen Materials, bevorzugt des Titans, auf der PES- oder Polymermembran resultiert.

Als Inertgas wird Argon oder wahlweise Krypton in die Beschichtungskammer eingeleitet. Aus dem Argon bildet sich durch Stoßionisation der Argon-Atome im Gasraum ein Argon-Niederdruck-Plasma. Daraufhin wird die Quelle zur Bildung des Argon-Niederdruck-Plasmas mit einer geeigneten Entladungsleistung gezündet. Bevorzugt kann hierfür ein Spannungsbereich von 150 W bis 600 W Gleichspannung gewählt werden. Nach der Durchführung der Beschichtung wird die beschichtete Probe, also die beschichtete Polymermembran entschleust und mit Stickstoff belüftet. Kommt die beschichtete Probe dabei in Kontakt mit Sauerstoff, beispielsweise mit Sauerstoff aus der Atmosphäre, so kann eine geringe Voroxidation stattfinden, bevor der Verfahrensschritt zur Herstellung einer Oxidschicht durch Oxidation zumindest eines Teils der Schicht aus einem oxidierungsfähigen Material stattfindet.

Alternativ kann das Beschichtungsverfahren auch ein nasschemisches Verfahren, insbesondere ein Sol-Gel-Verfahren, sein.

Ferner wird die Bereitstellung einer beschichteten Polymermembran mit einer Porenstruktur, welche nach einem vorbeschriebenen Verfahren hergestellt ist, vorgeschlagen.

Zudem wird die Bereitstellung einer beschichtete Polymermembran mit einer Porenstruktur, wobei die Polymermembran eine Kapillarmembran und/oder eine Flachmembran ist, wobei die Polymermembran Polyethersulfon aufweist, wobei die Polymermembran eine Vielzahl von Poren mit einem Mittelwert der Porengröße von etwa 0,2 µm aufweist, wobei die Polymermembran eine Porosität von etwa 80% aufweist, wobei die Polymermembran eine Dicke von etwa 300 µm aufweist, wobei die Polymermembran eine Schicht umfassend TiO₂ mit einer Dicke von etwa 150 nm aufweist, vorgeschlagen.

### Kurze Beschreibung der Zeichnungen

Ein Ausführungsbeispiel des erfindungsgemäßen Verfahrens beziehungsweise der erfindungsgemäßen Polymermembran wird nachstehend anhand der Zeichnungen näher erläutert. Es zeigen:
- Fig. 1: ein Flussdiagramm eines Verfahrens zur Herstellung einer beschichteten Polymermembran mit einer Porenstruktur zur Filtration von Wasser,
- Fig. 2: einen Querschnitt durch eine erste beschichtete Polymermembran mit einer Porenstruktur zur Filtration von Wasser,
- Fig. 3: einen Querschnitt durch eine zweite beschichtete Polymermembran mit einer Porenstruktur zur Filtration von Wasser,
- Fig. 4: einen Querschnitt durch eine dritte beschichtete Polymermembran mit einer Porenstruktur zur Filtration von Wasser, und
- Fig. 5: einen Querschnitt durch eine vierte beschichtete Polymermembran mit einer Porenstruktur zur Filtration von Wasser.

### Ausführliche Beschreibung der Zeichnungen

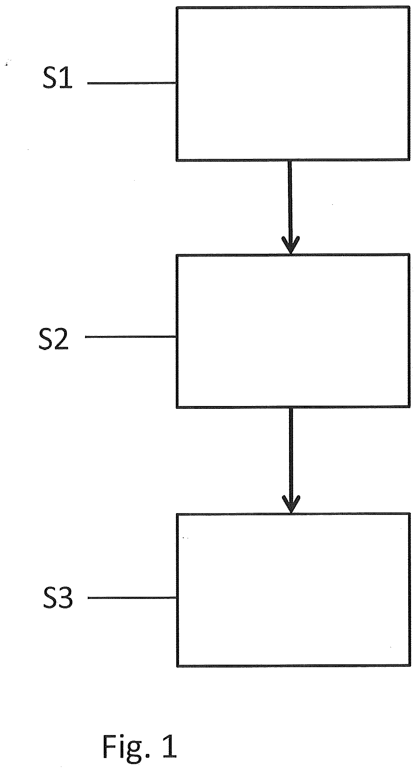

In Fig. 1 ist ein Verfahrensablauf zur Herstellung einer beschichteten Polymermembran mit einer Porenstruktur zur Filtration von Wasser dargestellt. In einem ersten Schritt S1 wird eine Polymermembran mit einer ersten Vielzahl von Poren bereitgestellt. Bei der Polymermembran kann es sich beispielsweise um eine asymmetrische oder symmetrische Polymermembran mit einer Porenstruktur handeln. Eine solche Polymermembran kann in Form eines PES/NMP/PVP-Kapillarmembransystem mit 0,2 µm Porenstruktur hergestellt werden. Zur Herstellung einer derartigen spezifischen Polymermembran wird eine erste Mischung ("Dope") aus Polyethersulfon, N-Methylpyrrolidon und Polyvinylpyrrolidon angesetzt. Zudem wird eine zweite Mischung ("Lumen") aus N-Methylpyrrolidon und Polyvinylpyrrolidon angesetzt. Die beiden Mischungen "Dope" und "Lumen" werden gemischt, entgast und temperiert. Anschließend wird eine Kapillarmembran über einen Spinnmaschine extrudiert und mit einer spezifischen Behandlungschemie nachbehandelt.

In einem zweiten Verfahrensschritt S2 wird die Polymermembran mit einer Schicht aus einem oxidierungsfähigen Material beschichtet. Bei dem oxidierungsfähigen Material kann es sich um Titan handeln. Für den Beschichtungsschritt kann als Verfahren ein Magnetron-Sputter-Depositionsverfahren verwendet werden, wobei die Membran, insbesondere die PES-Membran, mit Titan beschichtet wird. Zur Beschichtung wird die Membran, insbesondere die PES-Membran, zugeschnitten und auf einem Probenhalter befestigt. Die auf dem Probenhalter befestigte PES-Membran wird in einer Vorvakuumschleuse bei 10⁻⁷ mbar eingebracht. Darauffolgend wird der Probenhalter mit der PES-Membran in eine Beschichtungskammer bei einem Druck von 2 x 10⁻⁸ mbar bis 3 x 10⁻⁸ mbar eingebracht. Zusätzlich wird in die Beschichtungskammer ein Titan-Target, aus dem durch das zu erzeugende Plasma in der Beschichtungskammer Titan-Atome abgelöst werden und sich auf der Membran ablagern. Die PES-Membran wird in einem geeigneten Abstand zum Titan-Target von 60 mm bis 70 mm positioniert. Zur Erreichung einer glatten Schichtkonsistenz wird ein geeigneter Sputter-Gasdruck gewählt, welcher üblicherweise im Bereich von 7 x 10⁻⁴ mbar bis 3 x 10⁻³ mbar liegt.

Um eine gleichmäßige Beschichtung zu erreichen wird die auf dem Probenhalter befestigte PES-Membran innerhalb der Beschichtungskammer mit einer Umlaufgeschwindigkeit von ca. 1 U/min. gedreht, um die gewünschte laterale Schichtablagerung zu erreichen. Hieraus resultiert eine Ablagerung von 1 nm einer Schicht Titan pro Minute. Bevor es zur eigentlichen Beschichtung kommt wird ein Inertgas, beispielsweise Argon oder Krypton, in die Beschichtungskammer eingeleitet. Aus dem Argon bildet sich durch Stoßionisation der Argon-Atome im Gasraum ein Argon-Niederdruck-Plasma. Es wird zur Bildung des Argon-Niederdruck-Plasmas eine Quelle mit einer geeigneten Entladungsleistung gezündet. Die Quelle wird mit einer Gleichspannung von 150 W bis 600 W Gleichspannung betrieben. Darauffolgend wird die Beschichtung durchgeführt und schließlich wird die beschichtete PES-Membran entschleust und mit Stickstoff beschichtet, um einen Kontakt mit Sauerstoff zu verhindern.

In einem dritten Verfahrensschritt S3 wird eine Oxidschicht durch Oxidation zumindest eines Teils der Schicht aus einem oxidierungsfähigen Material in einem physikalischen oder nasschemischen Oxidationsverfahren hergestellt. Im hier beschrieben Beispiel ist das oxidierungsfähige Material Titan. Bevorzugt findet die Umwandlung, Oxidation beziehungsweise die Verstärkung der Oxidation des auf der Polymermembran im vorangegangenen Schritt S2 aufgetragenen Titans durch ein physikalisches oder nasschemisches Aktivierungs- und Oxidationsverfahren statt. Besonders bevorzugt handelt es sich bei dem Oxidationsverfahren um Niederdruck-Sauerstoffplasmaverfahren. Bei dem Verfahren sind die relevanten Prozessparameter Druck, Leistung, Prozesszeit, Gasfluss und Gaszusammensetzung. Das Niederdruck-Sauerstoffplasmaverfahren zur Umwandlung oder Verstärkung der Oxidation der oxidierungsfähigen Schicht aus Titan umfasst dabei die Schritte des Einbringens der beschichteten Polymermembran in eine Vakuum- oder Plasmakammer, der Generierung eines Niederdruckes in einen Bereich von 0,1 mbar bis 0,7 mbar, bevorzugt kleiner als 0,2 mbar, in der Vakuumkammer sowie der Wahl eines passenden Sauerstoffgasflusses im Bereich von 20 sccm bis 100 sccm (standard cubic centimeters per minute), wobei besonders bevorzugt ein Gasfluss von Sauerstoff von 20 sccm gewählt wird. Der zur Erzeugung des Plasmas verwendete Plasmagenerator wird mit einer Leistung von 50 W bis 500 W betrieben und es wird ein Frequenzbereich im Bereich der Radiowellen und der Mikrowellen gewählt. Bevorzugt werden Frequenzen in der Größenordnung von 1 MHz bis 3 GHz gewählt. Wobei speziell etwa 13,56 MHz gewählt werden. Die Dauer des Herstellungsverfahrens einer Oxidschicht aus dem Titan beträgt etwa 1 Min. bis 10 Min. Nach Zünden des Plasmas wird die Probe über die gewählte Beschichtungszeit beschichtet und anschließend aus der Vakuumkammer beziehungsweise Plasmakammer ausgeschleust. Ergebnis des derart durchgeführten Verfahrens ist eine mit einer stark oxidierten Beschichtung versehene Polymermembran mit verbessertem transmembranen Fluss beziehungsweise einer höherer Durchflussrate sowie längerer Standzeit durch eine reduzierte partikuläre Ablagerung auf der Membran in Wasseranwendungen im Bereich der Mikrofiltration.

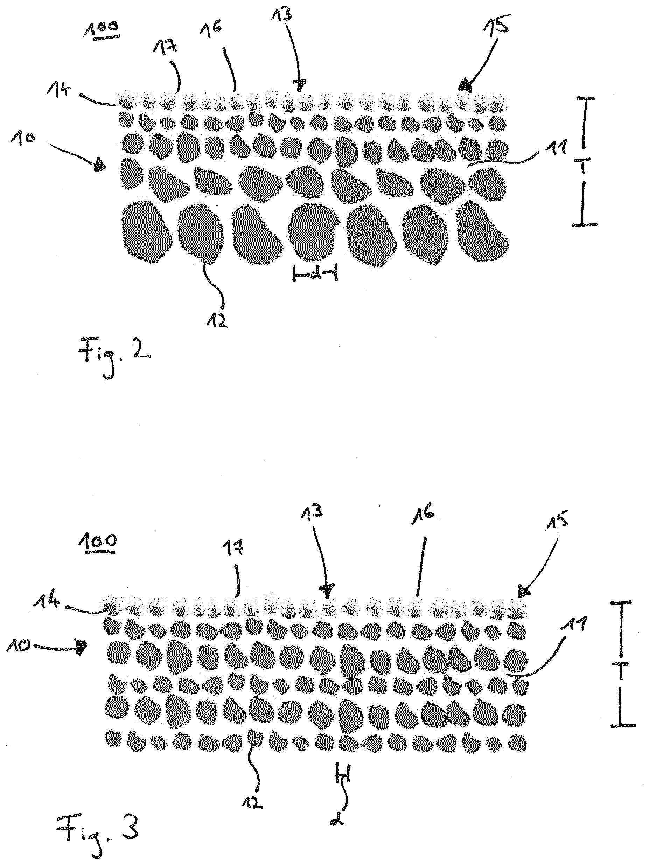

In Fig. 2 ist ein Querschnitt durch eine asymmetrische beschichtete Polymermembran 100 dargestellt. Die Polymermembran 100 umfasst eine Kapillarmembranstruktur 10 mit einer Porenstruktur 11. Die Kapillarfasern 12 der Kapillarmembranstruktur 10 weisen in Abhängigkeit ihres Abstandes T von einer Oberfläche 13 der Polymermembran 100 einen unterschiedlichen Durchmesser d auf. Die Kapillarfasern 12 sind in etwa parallel zur Oberfläche 13 der Polymermembran 100 ausgerichtet. Die oberste Schicht 14 der Kapillarmembranstruktur 10 ist mit einer Oxidschicht 15 umfassend Titanoxid 16 beziehungsweise Titanoxid-Molekülen 17 beschichtet. Dabei umhüllt die Oxidschicht 15 umfassend Titanoxid 16 die Kapillarfasern 12 der obersten Schicht 14 zu etwa 50 % bis 75 %. Bevorzugt wird die dargestellte Polymermembran 100 so hergestellt, dass die Titanschicht die Kapillarfasern 12 direkt umhüllt, ohne dass sich eine nicht durchgängige Schicht auf der Oberfläche 13 der Polymermembran 100 bildet, in welcher erst noch Poren ausgebildet werden müssen.

Die Polymermembran 100 der Fig. 3 unterscheidet sich von der Polymermembran der Fig. 2 lediglich dadurch, dass die Dicke d der Kapillarfasern 12 des Kapillarmembransystems 10 nicht in Abhängigkeit von dem Abstand T von der Oberfläche 13 der Polymermembran 100 variiert. Es handelt sich um eine symmetrische Polymermembran. Der Durchmesser d der Kapillarfasern 12 ist dabei um ein statistisches Mittel im Wesentlichen normal verteilt und weist keine besondere Abhängigkeit in Bezug auf den Abstand T von der Oberfläche 13 der Polymermembran 100 auf.

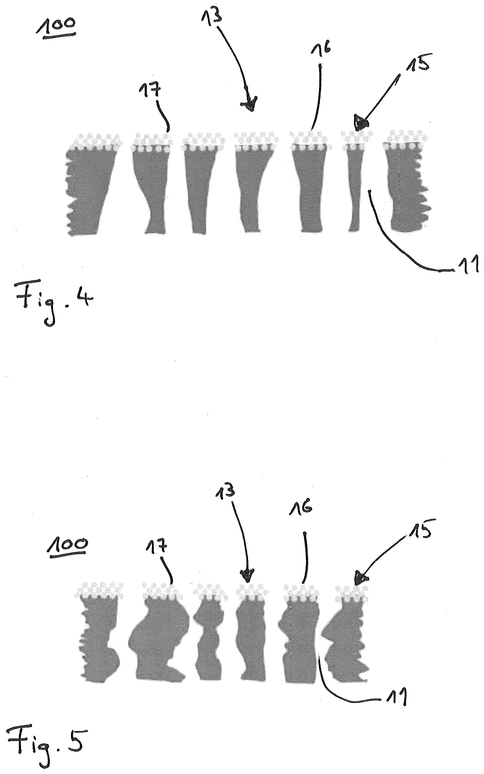

Im Ausführungsbeispiel der Fig. 4 hat die Polymermembran 100 eine Porenstruktur 11, welche im Wesentlichen senkrecht zur Oberfläche 13 der Polymermembran 100 verlaufende Poren beziehungsweise Kanäle aufweist. Die Oxidschicht 15 der Polymermembran 100 mit Titanoxid-Molekülen 17 ist auf der Oberfläche 13 der Polymermembran 100 angeordnet, wobei durch das Beschichtungsverfahren sichergestellt wird, dass die Poren beziehungsweise Porenkanäle der Polymermembran 100 in strömungstechnischen Kontakt zur Umgebung stehen.

Die Ausführungsform in Fig. 5 der Polymermembran 100 unterscheidet sich von der Ausführungsform in der Fig. 4 lediglich dadurch, dass eine innere Struktur der Polymermembran 100 gewählt ist, welche eine rauere Oberfläche aufweist, sodass ein gewissermaßen mäanderndes Kanalsystem oder eine mäandernde Porenstruktur 11 entsteht. Durch die Wahl der Porenstruktur 11 kann die Durchflussrate weiter beeinflusst werden. Zudem können Verwirbelungen in das durch die Polymermembran 100 fließende Wasser eingebracht werden, welche die Austrittsgeschwindigkeit und Austrittsrichtung des Wassers nach Durchlaufen der Polymermembran beeinflussen.

### Liste der Bezugszeichen

- 51: Verfahrensschritt
- S2: Verfahrensschritt
- S3: Verfahrensschritt

- 100: Polymermembran
- 10: Kapillarmembranstruktur
- 11: Porenstruktur
- 12: Kapillarfasern
- 13: Oberfläche
- 14: Oberste Schicht
- 15: Oxidschicht
- 16: Titanoxid
- 17: Titanoxid-Moleküle

- T: Abstand
- d: Durchmesser

## Patentansprüche

1. Verfahren zur Herstellung einer beschichteten Polymermembran (100) mit einer Porenstruktur (11) zur Filtration von Wasser umfassend die Schritte:
a) Bereitstellen einer Polymermembran (100) mit einer ersten Vielzahl von Poren,
b) Beschichten der Polymermembran (100) mit einer Schicht umfassend ein oxidierungsfähiges Material, wobei das oxidierungsfähige Material ein Metall oder Halbmetall ausgewählt aus der Gruppe umfassend Titan, Zirkonium, Silizium, Aluminium, Mangan, Vanadium, Chrom, aufweist,
c) Herstellung einer Oxidschicht (15) durch Oxidation zumindest eines Teils der Schicht umfassend ein oxidierungsfähiges Material in einem Oxidationsverfahren,
**dadurch gekennzeichnet, dass**
das Oxidationsverfahren ein Niederdruck-Plasmaverfahren ist.

2. Verfahren nach Anspruch 1,
**dadurch gekennzeichnet, dass**
die Oxidschicht (15) mindestens ein Metalloxid oder Halbmetalloxid ausgewählt aus der Gruppe umfassend Titandioxid, Titan(IV)-oxid, Siliziumdioxid, Aluminiumoxid, Zirkonium(IV)-oxid, Mangan(IV)-oxid, Vanadium(IV)-oxid, aufweist.

3. Verfahren nach Anspruch 1 oder 2,
**dadurch gekennzeichnet, dass**
das Niederdruck-Plasmaverfahren ein Niederdruck-Sauerstoffplasmaverfahren ist.

4. Verfahren nach Anspruch 3,
**dadurch gekennzeichnet, dass**
ein Gasfluss eines Plasmagases, auf 5 sccm bis 200 sccm, bevorzugt auf 10 sccm bis 100 sccm, besonders bevorzugt auf etwa 20 sccm, eingestellt wird, und/oder wobei die Leistung eines Plasmagenerators auf 10 W bis 1000 W, bevorzugt auf 50W bis 500 W, besonders bevorzugt auf etwa 250 W, eingestellt wird, und/oder wobei ein Frequenzbereich eines Plasmagenerators auf 1 MHz bis 3GHz, bevorzugt auf 10 MHz bis 2 GHz, besonders bevorzugt auf etwa 13,56 MHz, eingestellt wird.

5. Verfahren nach einem der vorgenannten Ansprüche, **dadurch gekennzeichnet, dass** die Polymermembran (100) eine asymmetrische oder symmetrische Membran ist, wobei die Membran bevorzugt ein Kapillarmembransystem und/oder ein Flachmembransystem aufweist.

6. Verfahren nach einem der vorgenannten Ansprüche,
**dadurch gekennzeichnet, dass**
die Größenverteilung der ersten Vielzahl von Poren der Polymermembran (100) einen Mittelwert von 0,04 µm bis 1,5 µm, bevorzugt von 0,1 µm bis 0,3 µm, insbesondere bevorzugt von etwa 0,2 µm, aufweist, und/oder dass die Größenverteilung der zweiten Vielzahl von Poren in der Schicht umfassend ein oxidierungsfähiges Material einen Mittelwert von 0,04 µm bis 1,5 µm, bevorzugt von 0,1 µm bis 0,3 µm, insbesondere bevorzugt von etwa 0,2 µm, aufweist.

7. Verfahren nach einem der vorgenannten Ansprüche,
**dadurch gekennzeichnet, dass**
die Polymermembran (100) eine Dicke von 10 µm bis 500 µm, bevorzugt von 200 µm bis 400 µm, besonders bevorzugt von etwa 300 µm aufweist, und/oder dass die Schicht umfassend ein oxidierungsfähiges Material eine Dicke von 1 nm bis 1 µm, bevorzugt von 10 nm bis 400 nm, besonders bevorzugt von etwa 100 nm aufweist.

8. Verfahren nach einem der vorgenannten Ansprüche,
**dadurch gekennzeichnet, dass**
die Polymermembran (100) mindestens ein Polymer ausgewählt aus der Gruppe umfassend Polysulfon, Polyethersulfon, Polyacrylnitril, Polyvinylfluorid, Polyethylen, Cellulose, Celluloseester, Polyamid, Polyetherketon, Polyetherimid, Polyimid, Silikon, Polymethylacrylat, Polycarbonat, Polyarylen, Polyphenylenether, Polybutadien, Vinylpolymer, Polyalkalyen, Fluoropolymer, Polyvinylidenfluorid, Polytetrafluoroethylen aufweist.

9. Verfahren nach einem der vorgenannten Ansprüche,
**dadurch gekennzeichnet, dass**
der Anteil des Oxids 10 bis 100 mol-% oder Gew.-% oder Volumen-%, insbesondere 50 bis 90 mol-% oder Gew.-% oder Volumen-%, der Schicht umfassend das oxidierungsfähige Material beträgt, und/oder dass die Porosität der Polymermembran (100) von 40 % bis 90 %, bevorzugt 70% bis 90 %, beträgt, und/oder das die Porosität der Schicht umfassend das oxidierungsfähige Material und/oder der Oxidschicht (15) von 40 bis 90%, bevorzugt 70% bis 90 %, beträgt.

10. Verfahren nach einem der vorgenannten Ansprüche,
**dadurch gekennzeichnet, dass**
der Verfahrensschritt der Beschichtung der Polymermembran (100) mit einer Schicht umfassend ein oxidierungsfähiges Material ein Verfahren der Dünnschichttechnik, und/oder ein physikalisches Gasphasenabscheidungverfahren, und/oder ein chemisches Gasphasenabscheidungverfahren, und/oder ein thermisches Verdampfungsverfahren, und/oder ein Sputterverfahren, insbesondere ein DC-Sputter-, HF-Sputter-, lonenstrahlsputter-, Magnetronsputterverfahren oder ein reaktives Sputterverfahren, und/oder ein plasmabasiertes lonenimplantationsverfahren, umfasst.

11. Verfahren nach Anspruch 10,
**dadurch gekennzeichnet, dass**
für den Schritt der Beschichtung der Polymerschicht mit einer Schicht umfassend ein oxidierungsfähiges Material die Polymermembran (100) in einer Beschichtungskammer angeordnet wird, und wobei die Polymermembran (100) bevorzugt in der Beschichtungskammer gedreht, rotiert und/oder durch die Beschichtungskammer durchgezogen wird.

12. Verfahren nach Anspruch 11,
**dadurch gekennzeichnet, dass**
in der Beschichtungskammer ein Target des oxidierungsfähigen Materials angeordnet wird, wobei der Abstand der Polymermembran (100) zum Target zwischen 10 mm und 200 mm, bevorzugt zwischen 50 mm und 80 mm, insbesondere bevorzugt etwa 60 mm oder etwa 70 mm beträgt, wobei weiter bevorzugt der Druck in der Beschichtungskammer während der Beschichtung 1 x 10⁻⁷ bis 3 x 10⁻⁸ mbar beträgt.

13. Verfahren nach Anspruch 11 oder 12,
**dadurch gekennzeichnet, dass**
die Polymermembran (100) mit einer Umlaufgeschwindigkeit von 0,1 bis 5 Umdrehungen pro Minute, bevorzugt mit 0,5 bis 5 Umdrehungen pro Minute, besonders bevorzugt mit etwa einer Umdrehung pro Minute gedreht oder rotiert wird, und/oder wobei pro Drehung der Polymermembran (100) eine Metallschicht und/oder eine Oxidschicht (15) von 0,1 nm bis 10 nm, bevorzugt 0,5 nm bis 5 nm, insbesondere bevorzugt von etwa 1 nm Dicke, auf die Polymermembran (100) aufgetragen wird, und/oder dass die Polymermembran (100) mit einer Zuggeschwindigkeit von 10 cm/min bis 40 cm/min durch die Beschichtungskammer gezogen wird, wobei bevorzugt eine Metallschicht und/oder eine Oxidschicht (15) von 20 nm bis 150 nm aufgetragen wird.

14. Verfahren nach einem der Ansprüche 1 bis 9, **dadurch gekennzeichnet, dass** der Verfahrensschritt der Beschichtung der Polymermembran (100) mit einer Schicht umfassend ein oxidierungsfähiges Material ein nasschemisches Verfahren, insbesondere ein Sol-Gel-Verfahren, umfasst.

## Claims

1. Method for producing a coated polymer membrane (100) with a pore structure (11) for the filtration of water, comprising the steps of:
a) providing a polymer membrane (100) with a first plurality of pores,
b) coating the polymer membrane (100) with a layer comprising an oxidizable material, wherein the oxidizable material has a metal or a semimetal selected from the group comprising titanium, zirconium, silicon, aluminum, manganese, vanadium, chromium,
c) producing an oxide layer (15) by oxidizing at least part of the layer comprising an oxidizable material in an oxidation method,
**characterized in that**
the oxidation method is a low-pressure plasma method.

2. Method according to claim 1,
**characterized in that**
the oxide layer (15) has at least one metal oxide or semimetal oxide selected from the group comprising titanium dioxide, titanium(IV) oxide, silicon dioxide, aluminum oxide, zirconium(IV) oxide, manganese(IV) oxide, vanadium(IV) oxide.

3. Method according to claim 1 or 2,
**characterized in that** the
low-pressure plasma method is a low-pressure oxygen plasma method.

4. Method according to claim 3,
**characterized in that**
a gas flow of a plasma gas is adjusted to 5 sccm to 200 sccm, preferably to 10 sccm to 100 sccm, particularly preferably to about 20 sccm, and/or wherein the power of a plasma generator is set to 10 W to 1000 W, preferably to 50 W to 500 W, particularly preferably to about 250 W, and/or wherein a frequency range of a plasma generator is set to 1 MHz to 3 GHz, preferably 10 MHz to 2 GHz, more preferably about 13.56 MHz.

5. Method according to one of the preceding claims, **characterized in that** the polymer membrane (100) is an asymmetric or symmetric membrane, wherein the membrane preferably has a capillary membrane system and/or a flat membrane system.

6. Method according to one of the preceding claims,
**characterized in that**
the size distribution of the first plurality of pores of the polymer membrane (100) has an average value of 0.04 µm to 1.5 µm, preferably 0.1 µm to 0.3 µm, particularly preferably of about 0.2 µm, and/or that the size distribution of the second plurality of pores in the layer comprising an oxidizable material has an average value of 0.04 µm to 1.5 µm, preferably 0.1 µm to 0.3 µm, particularly preferably about 0.2 µm.

7. Method according to one of the preceding claims,
**characterized in that**
the polymer membrane (100) has a thickness of 10 µm to 500 µm, preferably 200 µm to 400 µm, particularly preferably about 300 µm, and / or that the layer comprising an oxidizable material has a thickness of 1 nm to 1 µm, preferably 10 nm to 400 nm, particularly preferably about 100 nm.

8. Method according to one of the preceding claims,
**characterized in that**
the polymer membrane (100) has at least one polymer selected from the group comprising polysulfone, polyethersulfone, polyacrylonitrile, polyvinyl fluoride, polyethylene, cellulose, cellulose ester, polyamide, polyetherketone, polyetherimide, polyimide, silicone, polymethyl acrylate, polycarbonate, polyarylene, polyphenylene ether, polybutadiene, vinyl polymer, polyalkalyene, fluoropolymer, polyvinylidene fluoride, polytetrafluoroethylene.

9. Method according to one of the preceding claims,
**characterized in that**
the proportion of the oxide is 10 to 100 % by mol or % by weight or % by volume, in particular 50 to 90 % by mol or % by weight or % by volume of the layer comprising the oxidizable material, and/or that the porosity of the polymer membrane (100) is 40% to 90%, preferably 70% to 90%, and/or that the porosity of the layer comprising the oxidizable material and/or the oxide layer (15) is 40 to 90%, preferably 70% to 90%.

10. Method according to one of the preceding claims,
**characterized in that**
the method step of coating the polymer membrane (100) with a layer comprising an oxidizable material comprises a method of thin-film technology, and / or a physical vapor deposition method, and / or a chemical vapor deposition method, and / or a thermal evaporation method, and/or a sputtering method, in particular a DC sputtering, HF sputtering, ion beam sputtering, magnetron sputtering method or a reactive sputtering method, and/or a plasma-based ion implantation method.

11. Method according to claim 10,
**characterized in that**
for the step of coating the polymer layer with a layer comprising an oxidizable material, the polymer membrane (100) is arranged in a coating chamber, and wherein the polymer membrane (100) is preferably rotated in the coating chamber and/or drawn through the coating chamber.

12. Method according to claim 11,
**characterized in that**
a target of the oxidizable material is arranged in the coating chamber, wherein the distance between the polymer membrane (100) and the target is between 10 mm and 200 mm, preferably between 50 mm and 80 mm, particularly preferably about 60 mm or about 70 mm, wherein more preferably the pressure in the coating chamber during the coating is 1 x 10⁻⁷ to 3 x 10⁻⁸ mbar.

13. Method according to claim 11 or 12,
**characterized in that**
the polymer membrane (100) is turned or rotated at a rotational speed of 0.1 to 5 revolutions per minute, preferably at 0.5 to 5 revolutions per minute, particularly preferably at about one revolution per minute, and/or wherein, per rotation of the polymer membrane (100), a metal layer and/or an oxide layer (15) of 0.1 nm to 10 nm, preferably 0.5 nm to 5 nm, particularly preferably of about 1 nm thickness, is applied to the polymer membrane (100), and/or **in that** the polymer membrane (100) is pulled through the coating chamber at a pulling speed of 10 cm/min to 40 cm/min, wherein preferably a metal layer and/or an oxide layer (15) of 20 nm to 150 nm is applied.

14. Method according to one of claims 1 to 9, **characterized in that** the method step of coating the polymer membrane (100) with a layer comprising an oxidizable material comprises a wet chemical method, in particular a sol-gel method.

## Revendications

1. Procédé, destiné à produire une membrane polymère (100) enduite, dotée d'une structure poreuse (11) pour la filtration d'eau, comprenant les étapes consistant à :
a) mettre à disposition une membrane polymère (100) dotée d'une première pluralité de pores,
b) enduire la membrane polymère (100) d'une couche comprenant une matière susceptible de s'oxyder, la matière susceptible de s'oxyder comportant un métal ou un métalloïde sélectionné dans le groupe comprenant le titane, le zirconium, le silicium, l'aluminium, le manganèse, le vanadium, le chrome,
c) créer une couche d'oxyde (15) par oxydation d'au moins une partie de la couche comprenant une matière susceptible de s'oxyder lors d'un procédé d'oxydation,
**caractérisé en ce que**
le procédé d'oxydation est un procédé par plasma basse-pression.

2. Procédé selon la revendication 1, **caractérisé en ce que** la couche d'oxyde (15) comporte au moins un oxyde métallique ou un oxyde semi-métallique, sélectionné dans le groupe comprenant le dioxyde de titane, l'oxyde de titane (IV), le dioxyde de silicium, l'oxyde d'aluminium, l'oxyde de zirconium (IV), l'oxyde de manganèse (IV), l'oxyde de vanadium (IV).

3. Procédé selon la revendication 1 ou 2, **caractérisé en ce que** le procédé par plasma basse-pression est un procédé par plasma d'oxygène basse-pression.

4. Procédé selon la revendication 3, **caractérisé en ce que** l'on règle un flux gazeux d'un gaz plasmagène à de 5 sccm à 200 sccm, de préférence à de 10 sccm à 100 sccm, de manière particulièrement préférentielle, à environ 20 sccm, et/ou la puissance d'un générateur de plasma étant réglée à de 10 W à 1000 W, de préférence à de 50W à 500 W, de manière particulièrement préférentielle, à environ 250 W, et/ou une plage de fréquences d'un générateur de plasma étant réglée à de 1 MHz à 3GHz, de préférence à de 10 MHz à 2 GHz, de manière particulièrement préférentielle, à environ 13,56 MHz.

5. Procédé selon l'une quelconque des revendications précédemment citées, **caractérisé en ce que** la membrane polymère (100) est une membrane asymétrique ou symétrique, la membrane comportant de préférence un système de membrane capillaire et/ou un système de membrane plate.

6. Procédé selon l'une quelconque des revendications précédemment citées, **caractérisé en ce que** la distribution dimensionnelle de la première pluralité de pores de la membrane polymère (100) présente une valeur moyenne de 0,04 µm à 1,5 µm, de préférence de 0,1 µm à 0,3 µm, de manière particulièrement préférentielle, d'environ 0,2 µm, et/ou **en ce que** la distribution dimensionnelle de la deuxième pluralité de pores dans la couche comprenant une matière susceptible de s'oxyder présente une valeur moyenne de 0,04 µm à 1,5 µm, de préférence de 0,1 µm à 0,3 µm, de manière particulièrement préférentielle, d'environ 0,2 µm.

7. Procédé selon l'une quelconque des revendications précédemment citées, **caractérisé en ce que** la membrane polymère (100) présente une épaisseur de 10 µm à 500 µm, de préférence de 200 µm à 400 µm, de manière particulièrement préférentielle, d'environ 300 µm, et/ou **en ce que** la couche comprenant une matière susceptible de s'oxyder présente une épaisseur de 1 nm à 1 µm, de préférence de 10 nm à 400 nm, de manière particulièrement préférentielle, d'environ 100 nm.

8. Procédé selon l'une quelconque des revendications précédemment citées, **caractérisé en ce que** la membrane polymère (100) comporte au moins un polymère sélectionné dans le groupe comprenant le polysulfone, le polyéthersulfone, le polyacrylonitrile, le fluorure de polyvinyle, le polyéthylène, la cellulose, l'ester de cellulose, le polyamide, le polyéthercétone, le polyétherimide, le polyimide, la silicone, le polyméthylacrylate, le polycarbonate, le polyarylène, le polyphényléther, le polybutadiène, le polymère vinylique, le polyalkylène, un fluoropolymère, le polyfluorure de vinylidène, le polytétrafluoroéthylène.

9. Procédé selon l'une quelconque des revendications précédemment citées, **caractérisé en ce que** la part de l'oxyde s'élève à de 10 à 100 % en mole ou % en poids ou % en volume, notamment à de 50 à 90 % en mole ou % en poids ou % en volume de la couche comprenant la matière susceptible de s'oxyder, et/ou **en ce que** la porosité de la membrane polymère (100) s'élève à de 40 % à 90 %, de préférence à de 70 % à 90 %, et/ou **en ce que** la porosité de la couche comprenant la matière susceptible de s'oxyder et/ou de la couche d'oxyde (15) s'élève à de 40 à 90%, de préférence à de 70 % à 90 %.

10. Procédé selon l'une quelconque des revendications précédemment citées, **caractérisé en ce que** l'étape de procédé de l'enduction de la membrane polymère (100) d'une couche comprenant une matière susceptible de s'oxyder comprend un procédé de dépôt en couche mince, et ou un procédé de dépôt physique en phase vapeur, et/ou un procédé de dépôt chimique en phase vapeur, et/ou un procédé d'évaporation thermique, et ou un procédé de pulvérisation, notamment un procédé de pulvérisation en CC, un procédé de pulvérisation HF, un procédé de pulvérisation par faisceau d'ions, un procédé de pulvérisation par magnétron ou un procédé de pulvérisation réactive et/ou un procédé d'implantation ionique sur base plasma.

11. Procédé selon la revendication 10, **caractérisé en ce que** pour l'étape de l'enduction de la couche polymère d'une couche comprenant une matière susceptible de s'oxyder, l'on place la membrane polymère (100) dans une chambre d'enduction, et la membrane polymère (100) étant de préférence tournée, mise en rotation dans la chambre d'enduction et/ou tirée à travers la chambre d'enduction.

12. Procédé selon la revendication 11, **caractérisé en ce que** l'on place dans la chambre d'enduction une cible de la matière susceptible de s'oxyder, l'écart entre la membrane polymère (100) et la cible se situant entre 10 mm et 200 mm, de préférence entre 50 mm et 80 mm, de manière particulièrement préférentielle étant d'environ 60 mm ou d'environ 70 mm, de préférence par ailleurs, pendant l'enduction, la pression dans la chambre d'enduction étant de 1 x 10⁻⁷ à 3 x 10⁻⁸ mbar.

13. Procédé selon la revendication 11 ou 12, **caractérisé en ce que** l'on fait tourner ou l'on met en rotation la membrane polymère (100) à une vitesse périphérique de 0,1 à 5 tours par minute, de préférence de 0,5 à 5 tours par minute, de manière particulièrement préférentielle à environ un tour par minute, et/ou par tour de la membrane polymère (100), l'on applique sur la membrane polymère (100) une couche métallique et/ou une couche d'oxyde (15) d'une épaisseur de de 0,1 nm à 10 nm, de préférence de 0,5 nm à 5 nm, de manière particulièrement préférentielle, d'environ 1 nm, et/ou **en ce que** l'on tire la membrane polymère (100) à travers la chambre d'enduction à une vitesse de traction de 10 cm/minute à 40 cm/minute, de préférence une couche métallique et/ou une couche d'oxyde (15) de 20 nm à 150 nm étant appliquée.

14. Procédé selon l'une quelconque des revendications 1 à 9, **caractérisé en ce que** l'étape de procédé de l'enduction de la membrane polymère (100) d'une couche comprenant une matière susceptible de s'oxyder comprend un procédé chimique humide, notamment un procédé sol-gel.
